# EUROPEAN PATENT APPLICATION

(11) **EP 3 520 938 A1**
(43) Date of publication of application: **07.08.2019**
(21) Application number: 18154722.5
(22) Date of filing: 01.02.2018
(51) Int. Cl.: B23B 51/02, B23B 51/06

(54) **HELICAL DRILL**

(71) Applicant: WALTER AG, 72072 Tübingen (DE)
(72) Inventor: BOEHNKE, David, 72762 Reutlingen (DE); LUMBARDU, Claudio, 72 119 AMMERBUCH (DE)
(74) Representative: Sandvik

(57) **Abstract**

The present invention is related to a helical drill comprising a drill axis (50), a shaft (1), and a cutting portion, which in turn is comprised of a front end (3) and a chip flute portion (2) extending between the shaft (1) and the front end (3), the chip flute portion comprising at least one chip flute (7) delimited by at least one web portion (8), the chip flute extending helically along the periphery of the chip flute portion (2) outside a central core (10) about the drill axis (50), wherein at least one minor cutting edge (9) extends along a transition from the chip flute (7) to the web portion (8), the web portion (8) defining a basically cylindrical envelope surface, whereas the front end (3) is tapering away from the chip flute portion (2) towards the drill axis (50), the front end (3) comprising at least one main cutting edge (4, 4', 5, 5') extending predominantly along a radial direction from a dead end (13) which crosses the drill axis (50), wherein at least one minor cutting edge portion (9') adjacent the front end (3) adjoins the main cutting edge (5, 5') at the radial outer end thereof. In order to provide a drill with an increased stability and torsional rigidity, there is suggested that a radial outer side of at least a chip flute section (12) adjacent the front end (3) is covered by a closed surface (6) adjoining the web portion (8) thereby forming a continuous circumferential surface of the chip flute section (12) adjacent the front end (3).

## Description

The present invention is related to a helical drill according to the preamble of claim 1.

The helical drill according to the present invention is particularly designed for chip forming machining of metallic work pieces and for drilling composite materials.

Such a drill comprises a shaft and a cutting portion, which are rotatable about a drill axis, wherein the cutting portion in turn is comprised of a front end and a chip flute portion extending between the shaft and the front end, the chip flute portion comprising at least one chip flute delimited by at least one web portion, the chip flute and web portion extending helically on the periphery of the chip flute portion outside a central core about the drill axis, wherein at least one minor cutting edge extends along an intersection of the chip flute wall and the circumferential face of the web portion, the web portion defining a basically cylindrical envelope surface, whereas the front end is tapering away from the chip flute portion towards the drill axis, the front end comprising at least one main cutting edge extending predominantly along a radial direction away from a dead end which crosses the drill axis, wherein at least one minor cutting edge section adjacent the front end adjoins the main cutting edge at the radial outer end thereof.

Prior art helical drills of this kind are suffering from a number of inherent problems which are difficult to be overcome as will be discussed in the following.

A dead end at the center of the drill cannot provide a cutting action and is merely pressed axially towards and into the material to be drilled. It is thus desired to keep the dead end as short as possible, for instance by providing so called web thinnings which are typically formed by grinding away the core of the drill at the tip of the drill in the front end. Such web thinnings are reducing the stability and rigidity of the tip of the drill and at the cutting edges extending to the dead and near the center of the drill.

Close to the center and with a given number of rotations per minute (rpm), the cutting speed is rather low due to the small radius while the cutting speed is much higher at the radial outer portions of the cutting edges. The chip flutes are generally provided with a constant helix angle at the periphery of the chip flute portion corresponding to a reasonable rake angle of the cutting edge near the periphery of the drill, but is necessarily reduced towards the center so that low cutting speed and smaller rake angle are combined near the center. Web thinnings can only slightly increase the rake angle which is again restricted in view of the required stability of the drill tip. Still, the rake angle cannot be optimized in relation to the different cutting speeds between the center at the drill tip and the outer radius of the drill since the cutting speeds are strongly varying from the center to the outer radius.

The different cutting parameters which are strongly varying from the center of the drill to the radial outer end of the main cutting edge cause the formation of different types and sizes of chips and the forces acting on the chips lead to a repeated deformation of chips which in turn results in the generation of additional heat and unbalanced and varying cutting forces. This in turn causes an unstable behavior of the drill during a cutting operation and may even cause breaking of the drill, in particular of small diameter drills which are less stable and may not withstand unbalanced and varying cutting forces. Even for helical drills having a larger diameter, the unbalanced and varying cutting forces may result in vibrations and may cause an increase of wear. Attempts have been made to cope with these problems and to reduce for instance vibrations by means of so-called guiding margins, which extend on the web portions adjacent the chip flutes and parallel to minor cutting edges in order to keep the chip flute portion centered.

The present invention seeks to provide drills with an increased stability and torsional rigidity in order to obviate or at least minimize some or all of the afore-mentioned problems.

This object is achieved by means of a helical drill having features defined in claim 1.

The helical drill according to claim 1 is characterized by a chip flute section adjacent the front end of the drill wherein the radially open side of the chip flute section is covered along the periphery of the drill by a closed surface adjoining the web portion, thereby forming a continuous circumferential surface of the chip flute section adjacent the front end.

The closed surface still leaves a tunnel connection between chip space provided in a circumferential direction in front of the main cutting edge at the front end of the drill to the chip flute axially behind the closed surface.

The web portions adjacent the front end, which are in contact with the wall of a hole being drilled at least in the vicinity of the minor cutting edges, are therefore no longer interrupted by the chip flute at least at a section close to and adjacent the front end which keeps the drill well centered without subjecting this part of the drill to any cutting forces. In particular, the radial outer ends of the main cutting edges and the corresponding transition to a minor cutting edge section immediately adjacent the front end and adjoining the main cutting edges are obtaining a much better support, stability and centering action by means of the continuous peripheral surface adjacent the front end. Still, removal of the chips generated by the main cutting edges at the front end is achieved via a tunnel-like opening formed by the chip flute and the closed surface covering the otherwise radially open side of the chip flute.

In as far as the stability of the front end and in particular of the cutting edges thereof is concerned, it would be sufficient to have a front section of the chip flutes covered extending in the axial direction by about 1/10, preferably 1/3 of the drill diameter. However, in far as the chip transport along the chip flute is concerned and depending on the type and size of chips which are generated and also depending on the work piece material, the closed section of the chip flutes may extend up to 50% or 95 % of the length of the chip flute section or up to 5 times or even 10 times the drill diameter along the axial direction.

Moreover, any of the axially forward or reward margins of the closed surface covering a chip flute section may have a varying axial distance from the drill tip along their circumferential extension. For instance, the margin of the closed surface adjacent the minor cutting edge, and the transition thereof to the main cutting edge may be axially slightly further away from the drill tip than the margin of the closed surface near the other side of the chip flute. In addition, the axial extension of the closed surface may vary along the circumferential direction.

In order to avoid unnecessary friction between the drill and the wall of a hole just being drilled by the front end, at least some part of a minor cutting edge which extends at the transition from the chip flute to a web portion, should be provided axially in front of the closed surface and adjacent the front end. In other words, the chip flute is still open at the front end at least on the side where the minor cutting edge occurs, also radially open at the most forward end of the chip flute portion. The axial extension of such section of a minor cutting edge in front of the closed surface may be in the order of 0,02 to 0,5 times the drill diameter.

Still, at a circumferential position further away from the minor cutting edge, the minimum axial distance of the closed part of the chip flute from the transition of the cylindrical chip flute section to the tapering front end may be 0 or they may even be a slight overlap with the front end. In other words, the closed surface may form a part of the front end at some circumferential distance from the minor cutting edge but does axially and radially not extend beyond the envelope surface of the front end for which the main cutting edges are forming a generatrix.

For a conventional drill there is a sharp corner transition from the main cutting edges at the front end to the minor cutting edges along the chip flute portion, which is called the cutting corner. Embodiments of the present drill are comprising a rounded cutting corner, wherein the curved transition of the envelope surface of the front end may have a radius of curvature in the range of 0,05 to 0,5 times the drill diameter. The main cutting edges follow the same curvature in a projection to a radial plane including the axis. The main cutting edges may also be curved by deviating from a generally radial extension near the drill axis towards a circumferential direction transitioning tangentially into the periphery of the drill at the minor cutting edge section. In a top view along the axis of the drill, the cutting edge thereby has a concave shape.

Accordingly, when compared to conventional helical drills, the transition from the front end to the chip flute section has a rather large radius of curvature so that any cutting edge occurring at this transition is less prone to wear and damage. Any tendency of getting off center due to cutting forces acting on concave cutting edges having a substantial tangential component is avoided and overcome by the closed circumferential surface guiding and centering the drill.

According to one embodiment, the main cutting edge at the front end of the drill is formed by the intersection of the envelope surface of the front end with a chip flute and with at least one web thinning extending into the core of the drill adjacent the drill tip and extending close to the drill axis, i.e. to a dead end crossing the drill axis. In other words, the main cutting edge at the front end is the generatrix of the front end of the helical drill. It is understood, that the relief surfaces following behind the main cutting edges in the direction of rotation, are axially behind the envelope surface.

According to the embodiment already mentioned above, when seen in a front view along the axis, the main cutting edge has a concave curved shape. In particular, such concave curved course of the main cutting edge when seen in a front view along the axis and starting out from the dead end, may be at first predominantly along a radial direction which is then given an increasing component along the tangential direction when approaching the periphery of the drill.

In a further embodiment of this kind, the radius of curvature of the concave main cutting edge may decrease when approaching the radial outer portions and may reach a minimum value at a radial position, which is at least 9/10 of the drill radius from the axis of the drill.

In another embodiment when seen in a side view perpendicular to the axis of the drill, the main cutting edge starting out from the dead end proceeds at first along a substantially linear line declining from the axis and corresponding to a conical tip angle and an increasing additional axial component when approaching the periphery of the chip flute section, finally transitioning into the minor cutting edge section substantially along the axial direction. The tip angle of the conical shape, measured between opposite flanks of the cone may fall within a range of 110° to 160 °

This shape corresponds to a cross section through envelope surface of the front end as defined above.

In one embodiment, the radial thickness of the closed wall extending across the chip flute may be varying with the circumferential direction. Thereby, sharp corner transitions to the more or less radially extending walls of the chip flute may be avoided.

The minimum radial thickness of the closed wall extending across a chip flute may be 1/20 of the drill diameter.

The drill according to the present invention may be made of tool steel, but is preferably made of a hard metal such as cemented carbide

For improving the chip flow through the chip flute or a corresponding circumferentially closed channel, the cutting portion and/or the chip flutes or -channels of the drill may be partly or completely coated with materials improving either the wear resistance and/or the chip transport along the chip.

The features, advantages and appliances may be derived from the following description of preferred embodiments and the related drawings.
- Figure 1: is a schematic side view of a drill according to the present invention.
- Figure 2: is an enlarged detail of figure 1 including the front end.
- Figure 3: is a top view of the front end seen along the axis of the drill.
- Figure 4: is another side view wherein the drill is rotated with respect to the representation in figure 1 about its axis by about 90°
- Figure 5: is a longitudinal section along the plane E-E in figure 3
- Figures 6 -10: show another embodiment having completely covered chip flutes and optional cooling/flushing channels as shown in figures 7 and 10

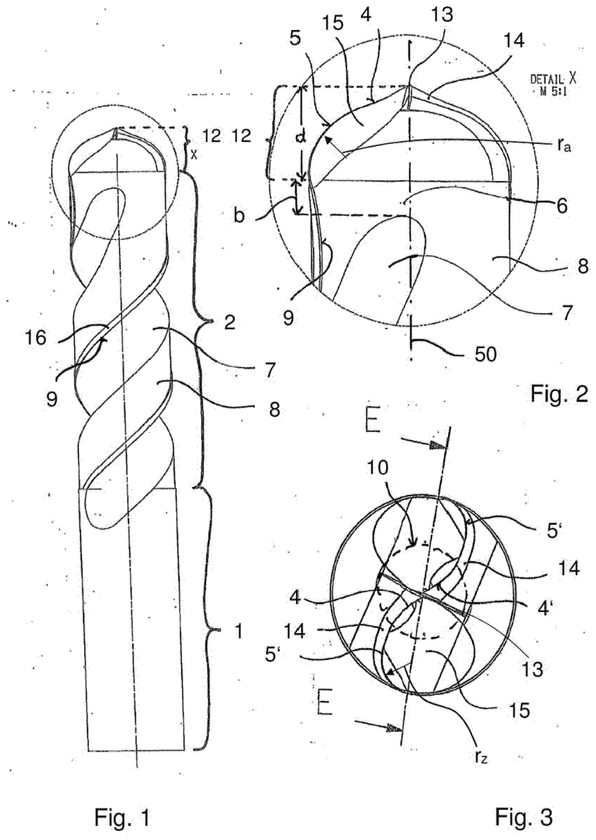

As can be seen from figures 1 and 2, the drill, which is designated by 100 as a whole, is comprised of a shaft 1 and a cutting portion, which cutting portion in turn is comprised of a chip flute portion 2 and a front end 3. The shaft is cylindrical defining an axis 50 and the chip flute portion also has a basically cylindrical envelope surface about the same axis 50. Regarding the basically cylindrical envelope surface of the chip flute portion, it may be noted that in some embodiments the envelope surface may have a slight taper towards the shaft such as in the order of 0,1-0,5 mm in diameter per 100 mm axial length.

In addition, the front end, just as the chip flute portion, is rotationally symmetric with regard to a rotation by 180°, i.e. this embodiment has at least two chip flutes, two web portions there between, and a front end with at least two main cutting edges offset with respect to each other by 180° in the circumferential direction.

The main cutting edges 4, 5 visible in figures 1 and 2 are substantially a projection of the main cutting edges into a radial plane E shown in figure 3. The main cutting edge in the view of figures 1 and 2 comprises a central substantially straight portion 4 and a curved transition to a minor cutting edge section 9' at the front end of a chip flute 7 immediately ahead of a closed surface 6, which is covering section 12 of the chip flute 7. The chip flute section is comprised of two chip flutes 7 delimited by intermediate web portions 8, wherein minor cutting edges 9 are formed at the transition from the wall of a chip flute 7 to the peripheral surface defined by the web portions 8. There may be a guiding margin extending along and parallel to the minor cutting edge 9 on the web portion 8, which serves to keep the chip flute section centered within a hole drilled.

As in particular visible in figure 2, the front end section 12 with the exception of a very small minor cutting edge section 9', is covered by a closed surface 6, forming a continuous peripheral surface within the peripheral surfaces of the web portions, so that within an axial section 12 of the drill, there is provided a closed cylindrical surface extending completely around the circumference of the drill. On the one hand, this surface serves as a guiding surface in order to keep the drill and in particular the front end of the drill centered and at the same time provide a stability of the front end of the drill and in particular of the cutting corner which is substantially rounded and forms the transition from the main cutting edge 5 to the minor cutting edge section 9'. Since there is no sharp corner at the transition to the minor cutting edge 9', these cutting edge portions are less prone to wear or damage.

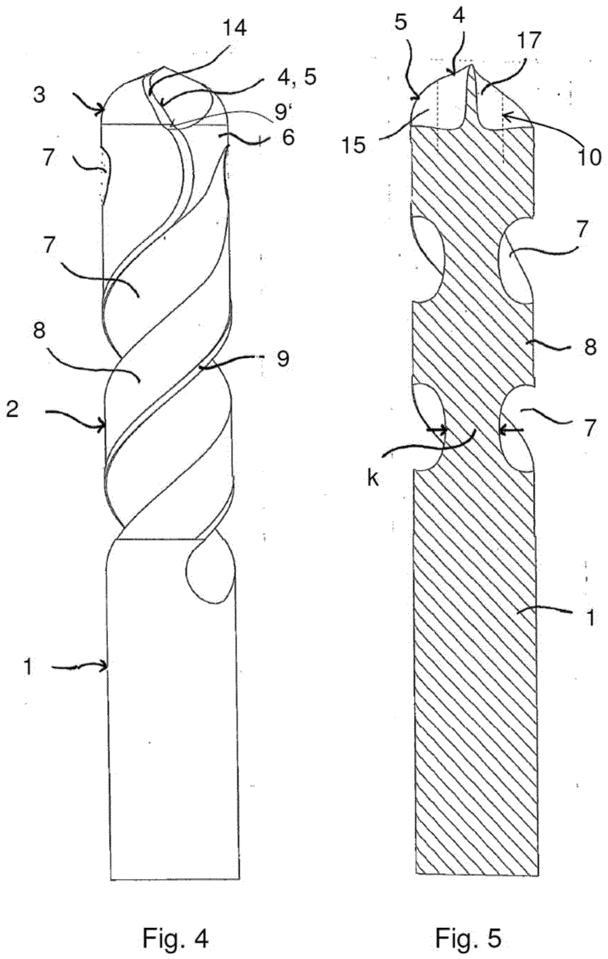

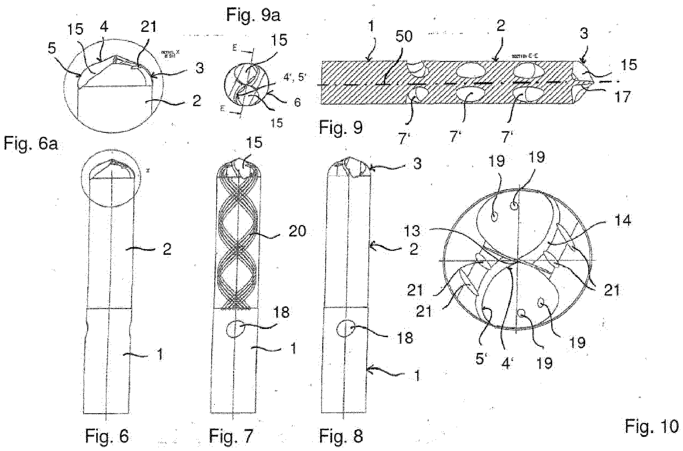

As can be seen in figure 5, the core of the drill has a diameter k, which is reduced at the front end of the drill by means of web thinnings 17, by removing the core material at the front end, such that only a narrow strip remains from the core as visible in figures 5 and 9. These web thinnings cause a very short dead end at the tip of the drill, thereby reducing the axial thrust which is required during drilling. However, it is obvious that the narrow strip remaining from the core 10 at the front end 3 is also reducing the stability of the front end which, on the other hand, is further enhanced due to the closed surface 6 near the front end.

The above mentioned guiding margin 16 may even extend over the closed surface section 12 and up to the front end 3. However, at least along the closed surface section 12,the guiding margins are not involved with any minor cutting edges, even though the closed surface portions 6 covering the chip flutes and optionally also the radial outer (peripheral) faces of the webs, may be slightly radially recessed with respect to the guiding margins.

As visible in figure 5, , the core 10 forming the central part of the drill (indicated at the front end by dashed lines) is removed by so-called "web thinnings" 17 extending close to the central axis 50 and leaving only a very short dead end 13, which connects the cutting edge portions 4, 4' extending from either end of the dead end. The length of the dead end, which extends substantially radially across the axis 50, may be less than 0.1 and in particular less than 0.02 times of the drill diameter R. In this embodiment, the axial extension of the web thinnings 17 is about the same as the axial length d (cf. Fig. 2) of the front end 3.

The axial extension b of the closed surface portions 6 covering the front end of the chip flutes 7 and measured from the axial position of the transition between shaft and front end, is in the present embodiment about 0.2 times the drill diameter 2R. However, this extension b may vary along the circumferential direction, in particular with regard to the extension towards the drill tip. The maximum axial distance of the closed surface 6 to the drill tip (which is actually formed by the dead end 13) may be in the order of 0.3 to 2 times the drill radius R.

According to the top view of figure 3, the main cutting edges 4', 5' are again comprised of a radial inner portion 4' which is substantially straight and a radial outer portion 5' which is strongly curved, wherein the designation 4' and 5' has been used in order to distinguish these portions in the top view from radially inner and outer cutting edge portions 4 and 5, respectively, in the side view of figure 1 and 2, Together, cutting edge portions 4, 5 in a side view and projected onto the plane E define the same main cutting edge as cutting edge portions 4', 5', in a top view. However the actual length of the straight portion 4 in the side view may be different from the length of the straight portion 4' in the top view and correspondingly also the curved portions 5, 5' may have a different length even though in total portions 4, 5 and 4', 5' are referring to the same cutting edge. The curved portion 5' has a radius of curvature rt, which may vary over the length of the cutting edge portion 5' and the circumferential component of its course may vary and in particular increase with an increased radial distance from the axis. The concave curvature of cutting edge portion 5' (in the top view) may reach a minimum value at a radial distance from the axis of about 0.9 R and finally have a transition into the minor cutting edge 9' substantially along a tangential direction.

The curved portion 5 in the view of figure 2 has a radius of curvature rₐ which again may vary along the length of the curved cutting edge portion 5 which provides a smooth transition from the straight cutting edge portion 4 into the substantially axially extending cutting edge portion 9', wherein any sharp corners at the transition from cutting portions 5, 5' to minor cutting edge section 9' are avoided.

Figures 6 to 10 are showing a second embodiment of a drill, in which the chip flutes 7' are completely covered along the whole axial length thereof and are exiting only in outlet openings18 in the periphery of the shaft 1. In addition, as shown in figure 7, this drill comprises flushing/cooling channels 20 extending helically along the web portions 8 and axially through the shaft 1, but are shown in phantom only in the chip flute portion, wherein the chip flutes are helically extending closed channels 7' The fluid channels may extend straight to the rear of the shaft where they may not interfere with helical chip channels.

The cooling/flushing channels 20 are exiting in openings 19 in the bottom of the chip flutes 7 and also in exit openings 21 in the front face of the front end within and adjacent a relief surface portion 14.

In the remainder, the drill of figures 6 to 10 is the same as the drill shown in figures 1 to 5, in particular with regard to the course of the cutting edges and the web thinnings 17 at the front end.

The present helical drill has a unique design in regard of both, the closed front section of the chip flute as well as with regard to the curved main cutting edges which transit into a minor cutting edge section 9' axially and tangentially without any pronounced corner.

### Reference signs

- 1: shaft
- 2: flute portion
- 3: front end
- 4, 4': straight cutting edge portion of main cutting edge
- 5, 5': curved cutting edge portion of main cutting edge
- 6: peripheral surface, closed surface
- 7: chip flute
- 8: web portion
- 9: minor cutting edge
- 9': minor cutting edge section
- 10: core, central core
- 12: chip flute section, front section
- 13: dead end
- 14: relief surface
- 15: chip space
- 16: guiding margin
- 50: drill axis
- 100: helical drill
- b: axial extension of closed surface
- d: Axial length of front end
- k: core diameter

## Claims

1. Helical drill comprising a drill axis (50), a shaft (1), and a cutting portion, which in turn is comprised of a front end (3) and a chip flute portion (2) extending between the shaft (1) and the front end (3), the chip flute portion comprising at least one chip flute (7) delimited by at least one web portion (8), the chip flute extending helically along the periphery of the chip flute portion (2) outside a central core (10) about the drill axis (50), wherein at least one minor cutting edge (9) extends along a transition from the chip flute (7) to the web portion (8), the web portion (8) defining a basically cylindrical envelope surface, whereas the front end (3) is tapering away from the chip flute portion (2) towards the drill axis (50), the front end (3) comprising at least one main cutting edge (4, 4', 5, 5') extending predominantly along a radial direction from a dead end (13) which crosses the drill axis (50), wherein at least one minor cutting edge portion (9') adjacent the front end (3) adjoins the main cutting edge (5, 5') at the radial outer end thereof, **characterized in that** a radial outer side of at least a chip flute section (12) adjacent the front end (3) is covered by a closed surface (6) adjoining the web portion (8) thereby forming a continuous circumferential surface of the chip flute section (12) adjacent the front end (3).

2. Helical drill according to claim 1, **characterized by** a tunnel connection between a chip space (15) at the front end (3) to the chip flute (7) axially behind the closed surface (6)

3. Helical drill according to claim 1 or 2, **characterized in that** in a side view perpendicular to the drill axis (50), at least one of the axially forward or rearward margins of the closed surface (6) covering the chip flute (7) has a varying axial distance (d) from the drill tip along its circumferential extension.

4. Helical drill according to any of the preceding claims, **characterized in that** the minimal axial distance (d) of the closed part of the chip flute from the transition of the cylindrical chip flute section to the tapering front end is between 0 and twice the nominal drill diameter.

5. Helical drill according to any of the preceding claims, **characterized in that** the axial extension (b) of the closed surface (6) covering a front section (12) of the chip flute (7) is from between 1/10 and 10 times the drill diameter (2R) preferably 1/3 to 5 times the drill diameter (2R).

6. Helical drill according to any of the preceding claims, **characterized in that** the front end (3) defines a rotationally symmetric envelope surface having the shape of a cone as the central part and at a convex curved transition towards and into the cylindrical envelope surface of the chip portion as a radial outer part.

7. Helical drill according to any of the preceding claims, **characterized in that** the curved transition of the envelope surface has a radius of curvature in the range of 1/10 to ½ of the drill diameter.

8. Helical drill according to any of the preceding claims, **characterized in that** the main cutting edge (4, 4') at the front end is formed by the intersection of the envelope surface of the front end (3) with a chip flute (7) and with at least one web thinning (11) extending into the core (10) of the drill adjacent the drill tip and extending close to the drill axis (50).

9. Helical drill according to any of the preceding claims, **characterized in that** in a top view along the axis, the main cutting edge (4', 5') has a concave curved shape.

10. Helical drill according to any of the preceding claims, **characterized in that** the concave curved course of the main cutting edge (4', 5') when seen in a top view along the axis (50) and starting out from the dead end (13) is at first predominantly along a radial direction and has an increasing component along the tangential direction when approaching the periphery of the drill.

11. Helical drill according to any of the preceding claims, **characterized in that** in the top view along the axis, the radius (rt) of curvature of the concave main cutting edge (5') decreases when approaching the radial outer portions and reaches a minimum value at a radial position of at least 9/10 of the drill radius (R) from the axis (50) of the drill.

12. Helical drill according to any of the preceding claims, **characterized in that** the main cutting edge (4, 5), when seen in a side view and starting out from the dead end (13), proceeds at first along a substantial linear line (4) corresponding to a conical tip angle, and with an increasing additional axial component when approaching the periphery of the chip flute section (12), finally transitioning into the minor cutting edge section (9') substantially along the axial direction.

13. Helical drill according to any of the preceding claims, **characterized in that** the radial thickness of the closed wall extending across the chip flute is varying with the circumferential direction.

14. Helical drill according to any of the preceding claims, **characterized in that** the minimum radial thickness of the closed wall extending across the chip flute is 1/20 of the drill diameter.

15. Helical drill according to any of the preceding claims, **characterized in that** the closed surfaces covers at least 50%, preferably up to 95% of the axial chip flute length

16. Helical drill according to any of the preceding claims, **characterized in that** the closed surfaces covers the chip flutes completely wherein a closed axial channel is adjoining the rear end of the chip flutes and extends helically through the shaft with a discharge opening 18 in the periphery or at the rear end of the shaft.

17. Helical drill according to any of the preceding claims, **characterized in that** a coolant channel is provided which extends basically along the axial direction either through the central core or through and along with the twisted web portions of the drill, wherein the coolant channels are open towards the front end of the drill.

18. Helical drill according to any of the preceding claims, **characterized in that** when seen in a top view along the axis (50), the cutting edges follows a straight line from the dead end to the periphery or may have a convex shape. or follows a combination of a convex, a concave and/or a straight line.

19. Helical drill according to any of the preceding claims, **characterized in that** the drill is made of tool steel, preferably of a hard metal such as cemented carbide, or of ceramic material

20. Helical drill according to any of the preceding claims, **characterized in that** the cutting portion thereof and/or the chip flutes or - channels may be partly or completely coated with materials improving either the wear resistance and or the chip transport along the chip flutes.
